# EUROPEAN PATENT APPLICATION

(11) **EP 2 570 889 A2**
(43) Date of publication of application: **20.03.2013**
(21) Application number: 11183049.3
(22) Date of filing: 28.09.2011
(51) Int. Cl.: G06F 3/01

(54) **Transducer module**

(30) Priority: 13.09.2011 TW 100132822
(71) Applicant: Chief Land Electronic Co. Ltd., Wugu Dist., New Taipei City 248 (TW)
(72) Inventor: Wang, Wen Chung, New Taipei City (TW); Ching, Chia-Nan, 32097 Zhongli City, Taoyuan County (TW)
(74) Representative: Karakatsanis, Georgios

(57) **Abstract**

The present invention is directed to a transducer module, which includes an actuator (22) that is directly or indirectly coupled to a vibration plate (24). The transducer module includes a plastic damper (26) that elastically secures the vibration plate to a frame (20).

## Description

### BACKGROUND OF THE INVENTION

### 1. FIELD OF THE INVENTION

The present invention generally relates to an actuator, and more particularly to a transducer module utilizing an actuator for generating acoustic energy or haptic feedback.

### 2. DESCRIPTION OF RELATED ART

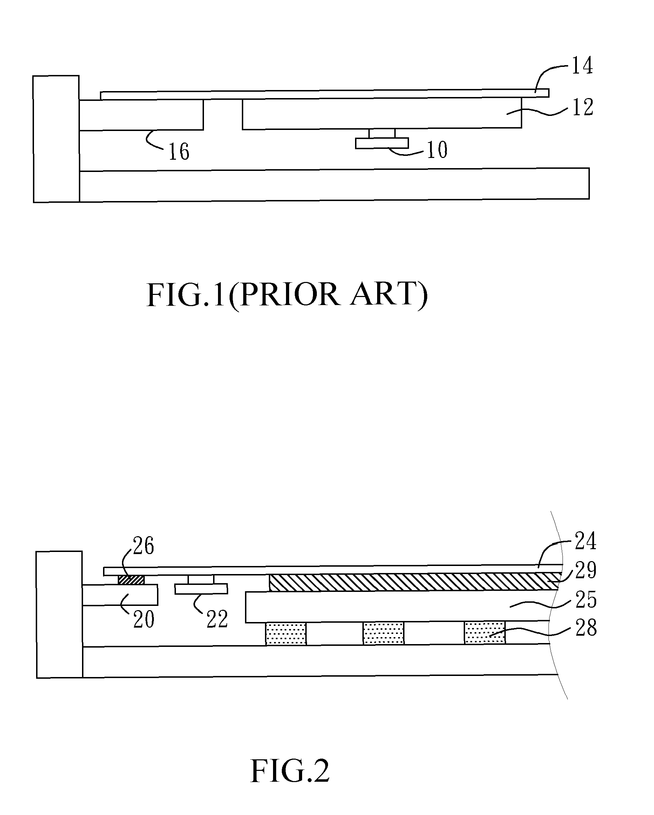

An actuator is one type of transducer that, for example, converts electric energy to mechanical energy, which may further generates acoustic energy or haptic feedback. FIG. 1 schematically shows a cross section of a conventional transducer module, which includes a display panel 12, a touch panel 14 coupled to the display panel 12 and an actuator 10 disposed under the display panel 12. One end of the touch panel 14 is firmly secured, for example, by mounting or gluing, to a frame 16.

The actuator 10 converts electric energy to mechanical energy, and the converted mechanical energy then exerts on the display panel 12 and the touch panel 14 to generate vibration, thereby resulting in haptic feedback or shaking the air. However, the haptic feedback or the acoustic propagation is commonly bounded by the frame 16, and a substantive portion of the vibration energy is absorbed by the frame 16 or is reflected by the frame 16 to generate destructive reflecting wave, thereby affecting haptic feedback, acoustic amplitude or quality.

Accordingly, a need has arisen to propose a novel transducer module for improving the drawbacks mentioned above.

### SUMMARY OF THE INVENTION

In view of the foregoing, it is an object of the embodiment of the present invention to provide a transducer module to ensure that a vibration plate of the transducer module can vibrate considerably and propagate haptic feedback or acoustic energy without being bounded by a frame, thereby reducing energy loss or reflection. Moreover, the embodiment is capable of generating better vibration effect to improve acoustic amplitude or quality.

According to one embodiment, a transducer module includes a frame, a vibration plate, an actuator and a plastic damper. The actuator is directly or indirectly coupled to the vibration plate. The plastic damper elastically secures the vibration plate to the frame.

### BRIEF DESCRIPTION OF THE DRAWINGS

FIG. 1 schematically shows a cross section of a conventional transducer module;
FIG. 2 schematically shows a cross section of a transducer module according to one embodiment of the present invention;
FIG. 3A to FIG. 3D show some top views demonstrating arrangement of the plastic damper;
FIG. 4 schematically shows a cross section of a transducer module according to another embodiment of the present invention; and
FIG. 5 schematically shows a cross section of a transducer module according to a further embodiment of the present invention.

### DETAILED DESCRIPTION OF THE INVENTION

FIG. 2 schematically shows a cross section of a transducer module according to one embodiment of the present invention. The transducer module primarily includes a frame 20, an actuator 22, a vibration plate 24 and a plastic damper 26. Specifically, the actuator 22 is directly or indirectly coupled to the vibration plate 24 (such as a touch panel, a substrate or an operating panel of other human-machine interface), and the vibration plate 24 is elastically secured to the frame 20 (such as a carrier or a rack) via the plastic damper 26. Accordingly, the actuator 22 converts electric energy to mechanical energy, and the converted mechanical energy then exerts on the vibration plate 24 to generate vibration, thereby resulting in acoustic energy or haptic feedback. Moreover, the elastic and damping properties of the plastic damper 26 is utilized to elastically secure the vibration plate 24 to the frame 20, such that a vibration region is provided for considerably propagating haptic feedback or acoustic energy without being bounded by the frame 20, thereby reducing energy loss or reflection. The embodiment may further include a display panel 25, which is coupled to a bottom surface of the vibration plate 24.

The actuator 22 of the embodiment may be made of a material such as, but is not limited to, piezoelectric material (e.g., lead-zirconate-titanate (PZT)), electro-active polymer (EAP), shape memory alloy (SMA), magnetostrictive material, a voice coil motor or a linear resonant actuator (LRA).

In the embodiment, the plastic damper 26 may be made of, but is not limited to, silicon-containing compound such as silicon gel or silicon rubber. The silicon gel is an unscented and nontoxic environment friendly material. The silicon gel is resistant to high and low temperature, and free of being contaminated. The material of the plastic damper 26 of the embodiment has Shore hardness (HS) less than 50 HS, and preferably less than 30 HS.

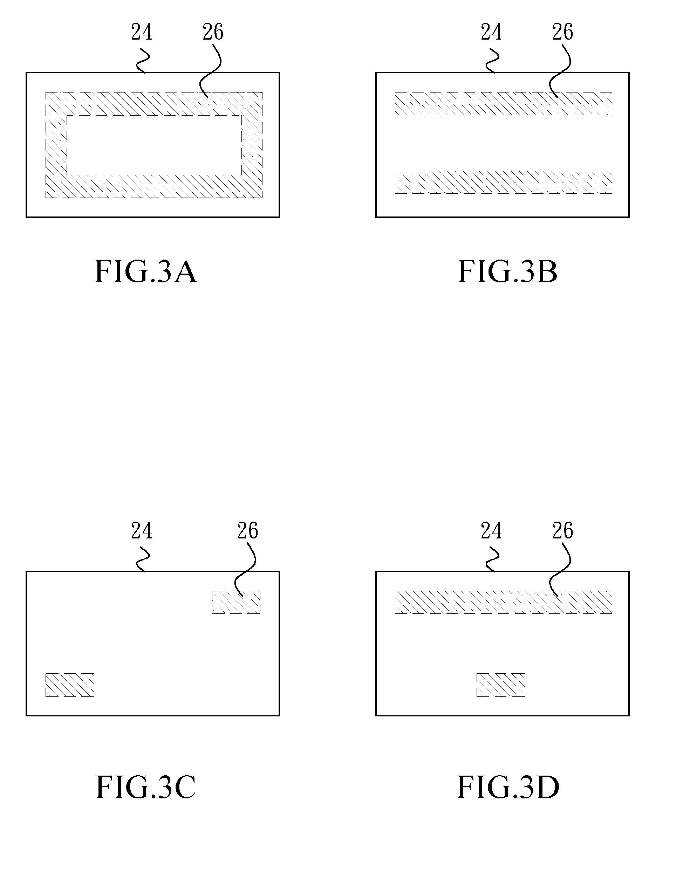

FIG. 3A to FIG. 3D show some top views demonstrating arrangement of the plastic damper 26. As shown in FIG. 3A, the plastic damper 26 includes a continuous ring, which is disposed on a periphery of the vibration plate 24. The ring-shaped plastic damper 26 may be perforated or split to form a discontinuous ring (not shown in the figure) for accommodating mechanisms or modules. As shown in FIG. 3B, the plastic damper 26 includes continuous strips, which are respectively disposed on at least two opposite or adjacent sides of a periphery of the vibration plate 24. The strip-shaped plastic damper 26 may be shortened, lengthened, perforated or split to be discontinuous strips (not shown in the figure) for accommodating mechanisms or modules. As shown in FIG. 3C, the plastic damper 26 includes at least two blocks, which are respectively disposed on at least two opposite or adjacent sides of a periphery of the vibration plate 24. As shown in FIG. 3D, the plastic damper 26 includes at least one strip and one block, which are respectively disposed on at least two opposite or adjacent sides of a periphery of the vibration plate 24. In practice, the continuous strip may be shortened, lengthened, perforated or split to be discontinuous strips (not shown in the figure) for accommodating mechanisms or modules. The plastic damper 26 subjected to shortened, lengthened, perforated or split to be discontinuous may be used to accommodate mechanisms or modules such as video modules or sound-releasing holes. Moreover, the plastic damper 26 subjected to shortened, lengthened, perforated, split or block shape to be discontinuous may reduce arrangement area and thus decrease restriction on the vibration plate 24, thereby enhancing the vibration effect of the vibration plate 24.

According to one aspect of the embedment of the present invention, the transducer module may further include a support member 28, which is directly or indirectly disposed between the frame 20 and the vibration plate 24. As exemplified in FIG. 2, one end of the support member 28 touches or fixes on the frame 20 (such as a substrate, a housing or a bottom plate), and another end of the support member 28 touches or fixes on a display panel 25 (that is, the support member 28 is indirectly coupled to the vibration plate 24). In an embodiment not shown in the figure, another end of the support member 28 touches or fixes on a bottom surface of the vibration plate 24 (that is, the support member 28 is directly coupled to the vibration plate 24). The support member 28 is used to distribute or support weight of the vibration plate 24 or the display panel 25, thereby decreasing loading of the actuator 22 while exerting on the vibration plate 24, such that inertial force generated by the actuator 22 may have better vibration effect and the acoustic amplitude and quality may be enhanced.

In the embodiment, the support member 28 may be made of a material, such as plastic, acrylic or metal, of Young's modulus higher than 10 Pascal (Pa). The support member 28 may have a shape of surface, ring, plate, strip, dot or a combination of some shapes mentioned above. The support member 28 may be perforated to reduce arrangement area and thus decrease restriction on the vibration plate 24 or the display panel 25, thereby enhancing the vibration effect of the vibration plate 24 or the display panel 25. The support member 28 subjected to perforated, surface-shaped, ring-shaped, plate-shaped, strip-shaped, dot-shaped or a combination thereof may be used to accommodate mechanisms or modules such as video modules or sound-releasing holes.

As discussed above, the actuator 22 may be directly or indirectly coupled to the vibration plate 24. As shown in FIG. 2, the actuator 22 is directly fixed on the vibration plate 24. However, the actuator 22 may be fixed on the display panel 25 to be indirectly coupled to the vibration plate 24. Although the actuator 22 as demonstrated in FIG. 2 is disposed on an internal surface of the vibration plate 24, the actuator 22 may be disposed on an external surface instead (not shown in the figure).

According to another aspect of the embodiment of the present invention, as shown in FIG. 2, a plastic laminating layer 29 may be further disposed between the vibration plate 24 and the display panel 25. The plastic laminating layer 29 may be commonly disposed on a periphery of the vibration plate 24 and the display panel 25. In the embodiment, the plastic laminating layer 29 may be disposed in a continuous or discontinuous manner. With respect to the continuous manner, dust particulates may be prevented from entering into space between the vibration plate 24 and the display panel 25. With respect to the discontinuous manner, the restriction on the vibration plate 24 may be reduced to enhance the vibration effect of the vibration plate 24.

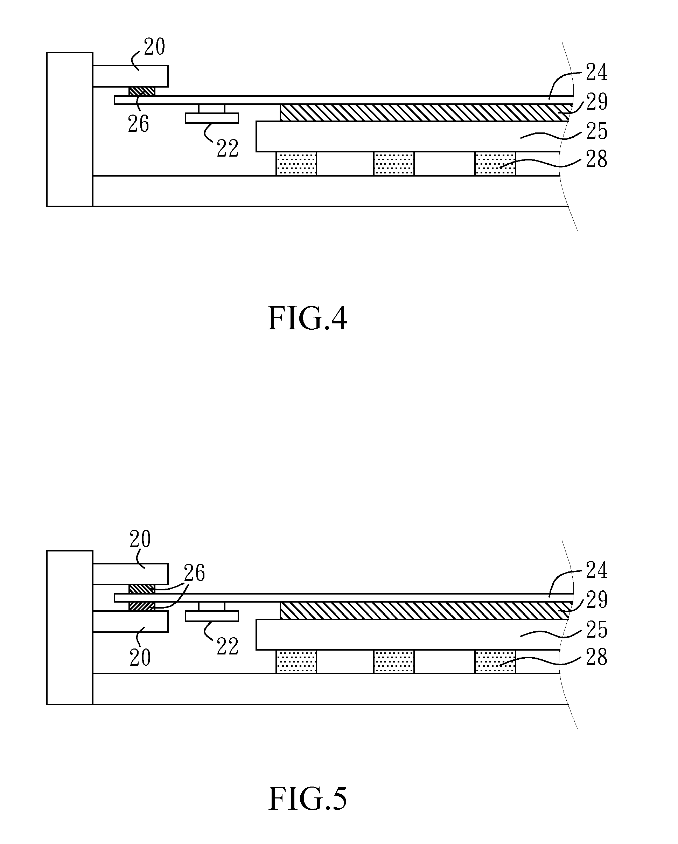

FIG. 4 schematically shows a cross section of a transducer module according to another embodiment of the present invention. The present embodiment is similar to the embodiment illustrated in FIG. 2, with the exception that the plastic damper 26 of the present embodiment is disposed above (or outside) the vibration plate 24, while the plastic damper 26 of FIG. 2 is disposed below (or inside) the vibration plate 24.

FIG. 5 schematically shows a cross section of a transducer module according to a further embodiment of the present invention. The present embodiment is similar to the embodiment illustrated in FIG. 2 or FIG. 4, with the exception that two plastic dampers 26 of the present embodiment are disposed above (or outside) and below (or inside) the vibration plate 24, respectively, while the plastic damper 26 of FIG. 2 or FIG. 4 is disposed on single side of the vibration plate 24.

Although specific embodiments have been illustrated and described, it will be appreciated by those skilled in the art that various modifications may be made without departing from the scope of the present invention, which is intended to be limited solely by the appended claims.

## Claims

1. A transducer module, comprising:
a frame;
a vibration plate;
an actuator, directly or indirectly coupled to the vibration plate; and
a plastic damper that elastically secures the vibration plate to the frame.

2. The transducer module of claim 1, wherein the vibration plate comprises a touch panel, a substrate or an operating panel of a human-machine interface.

3. The transducer module of claim 1, wherein the actuator comprises piezoelectric material, electro-active polymer (EAP), shape memory alloy (SMA), magnetostrictive material, a voice coil motor or a linear resonant actuator (LRA).

4. The transducer module of claim 1, wherein the plastic damper comprises silicon-containing compound.

5. The transducer module of claim 4, wherein the silicon-containing compound comprises silicon gel or silicon rubber.

6. The transducer module of claim 1, wherein the plastic damper comprises a material having Shore hardness (HS) less than 50 HS.

7. The transducer module of claim 1, wherein the plastic damper comprises a continuous ring disposed on a periphery of the vibration plate.

8. The transducer module of claim 1, wherein the plastic damper comprises continuous strips respectively disposed on at least two opposite or adjacent sides of a periphery of the vibration plate.

9. The transducer module of claim 1, wherein the plastic damper comprises at least two blocks respectively disposed on at least two opposite or adjacent sides of a periphery of the vibration plate.

10. The transducer module of claim 1, wherein the plastic damper comprises at least one strip and at least one block respectively disposed on at least two opposite or adjacent sides of a periphery of the vibration plate.

11. The transducer module of claim 1, further comprising at least one support member, directly or indirectly disposed between the frame and the vibration plate.

12. The transducer module of claim 11, further comprising a display panel that is disposed on a bottom surface of the vibration plate, wherein one end of the support member touches or fixes on the frame, and another end of the support member touches or fixes on the display panel.

13. The transducer module of claim 11, wherein the support member comprises a material of Young's modulus higher than 10 Pascal (Pa).

14. The transducer module of claim 13, wherein the support member comprises plastic, acrylic or metal.

15. The transducer module of claim 11, wherein the support member has a shape of surface, plate, ring, strip, dot or a combination thereof.

16. The transducer module of claim 11, wherein each said support member is continuously or discontinuously disposed between the frame and the vibration plate.

17. The transducer module of claim 1, wherein the actuator is directly disposed on an internal or external surface of the vibration plate.

18. The transducer module of claim 12, further comprising a plastic laminating layer disposed between the vibration plate and the display panel.

19. The transducer module of claim 1, wherein the plastic damper is disposed on an internal or external surface of the vibration plate.

20. The transducer module of claim 1, wherein a plurality of the plastic dampers are disposed respectively on an internal surface and an external surface of the vibration plate.
